# EUROPÄISCHE PATENTSCHRIFT

(11) **EP 2 173 158 B1**
(45) Veröffentlichungstag und Bekanntmachung des Hinweises auf die Patenterteilung: **07.05.2014**
(21) Anmeldenummer: 08775371.1
(22) Anmeldetag: 29.07.2008
(51) Int. Cl.: A01K 11/00

(54) **VORRICHTUNG UND EIN VERFAHREN ZUM BEREITSTELLEN VON INFORMATIONEN ÜBER TIERE BEIM DURCHLAUFEN EINES TIERDURCHGANGES**
DEVICE AND A METHOD FOR PROVIDING INFORMATION ABOUT ANIMALS WHEN WALKING THROUGH AN ANIMAL PASSAGE
DISPOSITIF ET PROCÉDÉ DE MISE À DISPOSITION D'INFORMATIONS CONCERNANT DES ANIMAUX TRAVERSANT UN PASSAGE POUR ANIMAUX

(30) Priorität: 31.07.2007 DE 102007036294
(43) Veröffentlichungstag der Anmeldung: 14.04.2010
(73) Patentinhaber: GEA Farm Technologies GmbH, 59199 Bönen (DE)
(72) Erfinder: SPRINGER, Andreas, 59269 Beckum (DE); SCHÖNROCK, Karsten, 58313 Herdecke (DE); NIESWAND, Elmar, 44625 Herne (DE); POHLKAMP, Manfred, 59302 Oelde (DE); FRANCKE, Heinz, 59302 Oelde (DE)
(74) Vertreter: Dantz, Jan Henning
(86) Internationale Anmeldenummer: PCT/EP2008/059948
(87) Internationale Veröffentlichungsnummer: WO 2009/016183

(56) Entgegenhaltungen:
- WO-A-2007/064202
- DE-A1-102007 055 704

## Beschreibung

Die Erfindung betrifft eine Vorrichtung und ein Verfahren zum Bereitstellen von Informationen über Tiere beim Durchlaufen eines Tierdurchganges, wobei diese Informationen zumindest die Anzahl der den Tierdurchgang durchlaufenden Tiere umfassen.

Ein gattungsgcrnäßes Verfahren und eine gattungsgemäße Vorrichtung sind aus der DE 103 51 911 A1 bekannt. Das in dieser Schrift vorgeschlagene Verfahren umfaßt zur Durchlauferkennung von Tieren beim Durchlaufen eines Tierdurchganges als Zutrittsbereich zu einem automatischen Melkstand zunächst eine Identifikation der zu melkenden Tiere über eine Identifkationseinrichtung. Diese Identifkationseinrichtung ist beispielsweise nach Art eines RFID-Systems ausgestaltet, welches eine Sender-/Empfängereinheit an einem Durchlauftor oder -gatter und Transponder oder Responder (beides RFID-Tags) ggf. mit Sensor umfaßt, welche die zu erkennenden Tiere tragen.

Bei der elektronischen Identifizierung von Tieren allein mittels derartiger Identifikationseinrichtungen kann es in bestimmten Betriebssituationen zu Erkenoungsproblemen kommen. Die Tiere betreten normalerweise den Melkstand durch einen Eingangsbereich. In diesem befindet sich dann die Identifikationseinrichtung, die dazu dient, die Tiere individuell zu identifizieren. Derart kann in einem Gruppenmelkstand eine Zuordnung zwischen den zu melkenden Tieren und den Melkplätzen durchgeführt werden. So wird das erste Tier, welches von der Identifikationseinrichtung erkannt wurde, automatisch dem ersten Melkplatz zugeordnet, das zweite Tier dem zweiten Melkplatz und so weiter.

Hat aber ein Tier seine Erkennungsmarke bzw. seinen Responder verloren, oder ist dieser defekt oder ist die Erkennung gestört, wird nicht bemerkt, dass ein Tier bereits einen Melkplatz physikatisch belegt obwohl dieser für die Rechnereinrichtung, welche die Melkplatzzuordnung auf der Basis eines Herdenmanagementsystems bzw. -programms steuert und verwaltet, datentechnisch noch frei zu sein scheint.

Hierdurch kommt es bei allen nachfolgenden Tieren der Reihe zu einer Verschiebung zwischen Tier und Melkplatz. Die Tiere werden dann dennoch gemolken, jedoch werden die Milchmengen und unter Umständen die anderen gewonnen Daten (Melkdauer, Leitwert, etc.) verworfen, um nicht falsche Daten bei den Tieren im Herdenmanagementsystem abzuspeichern.

Zur Vermeidung dieses Problems wird es in der gattungsgemäßen DE 103 51 911 A daher weiter vorgeschlagen, die Tiere unabhängig von der Identifizierung ihrer Responder durch eine Erkennungseinrichtung zu zählen, welche - basierend auf einem Sensorsystem wie einer Lichtschranke oder einer Kamera - die Tiere erfaßt und zählt.

Derart wird erreicht, dass ein nicht identifiziertes Tier, das an einem Melkplatz steht, dennoch bei der Melkplatzbelegung mitgezählt wird, so dass jedenfalls die nachfolgenden, identifizierten Tiere automatisch den richtigen Melkplätzen zugeordnet werden.

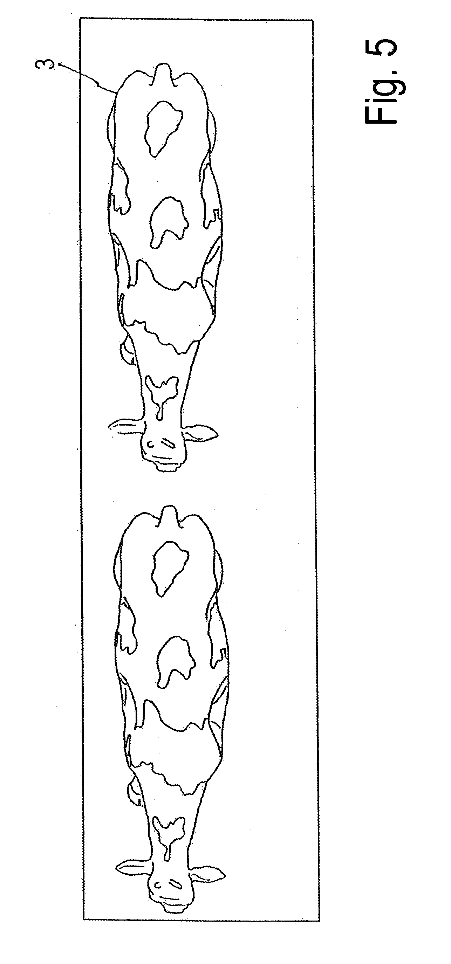

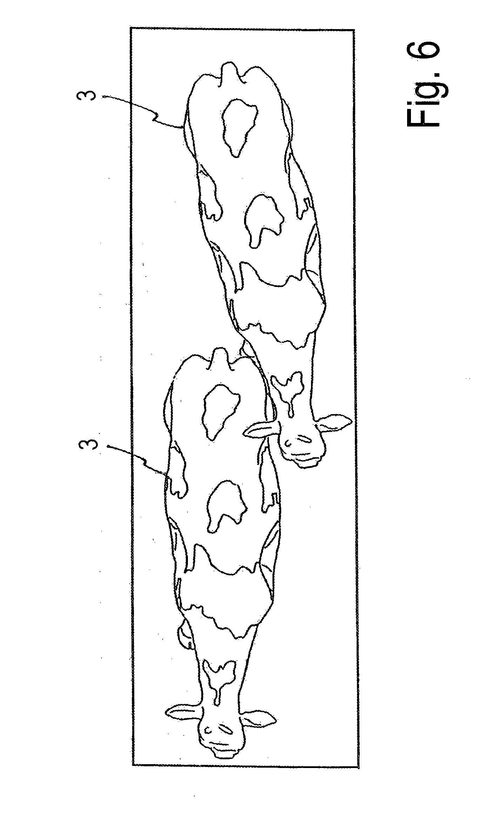

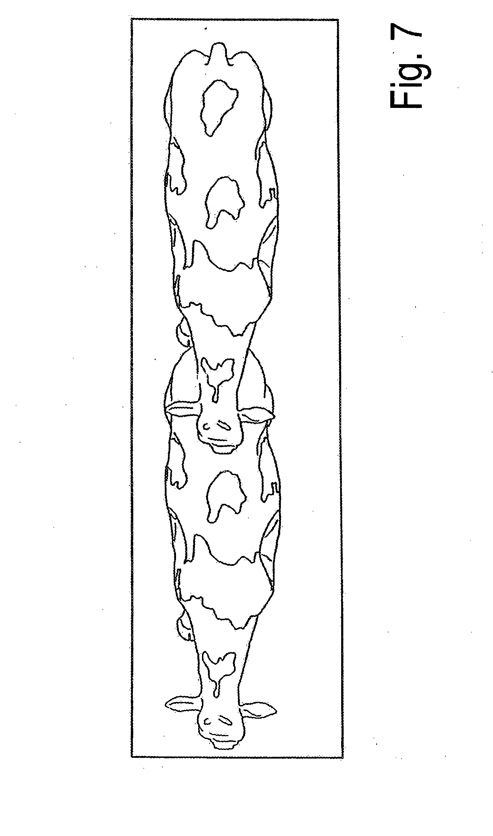

Die gattungsgemäße Vorrichtung hat sich somit an sich gut bewährt. Optimierbar erscheint sie aber noch in Hinsicht auf die Auslegung der Erkennungseinrichtung. So erweist sich eine exakte Zählung der Tiere als schwierig, da sie nicht wie bei gewöhnlichen industriellen Prozessen in regelmäßigen Abständen bzw. mit einer konstanten Geschwindigkeit den Melkstand betreten. Es kann ferner vorkommen, dass ein Tier im Bereich der Erkennung stehen bleibt, dass zwei Tiere direkt hintereinander (Fig. 6) oder seitlich hintereinander versetzt (Fig. 7) den Melkstand betreten oder dass einzelne oder mehrere Tiere mit hoher Geschwindigkeit in den Melkstand laufen (angedeutet in Fig. 5). All diese Situationen sind schwierig zu erfassen.

Zum technologischen Hintergrund sei noch folgender Stand der Technik genannt:
Die WO 03/039247 A1 betrifft eine Anlage für die Kontrolle der Anwesenheit eines 1-dentifikationslabels (Responder) bei Tieren. Ein Tier, das nicht identifizierbar ist, wenn das Identifikationslabel fehlt, soll trotzdem in zuverlässiger Weise erkannt werden.

Hierzu müssen weitere Vorrichtungen eingesetzt werden: eine Detektionseinrichtung, die feststellt, ob das Tier im Abfragefeld der Tiercrkennung befindlich ist und eine zusätzliche Unterscheidungseinrichtung, die das Tier dann markiert, wenn es keinen Responder hat und dementsprechend kein Signal im Abfragefeld festgestellt wurde. Diese Unterscheldungseinrichtung kann beispielsweise über Besprühen des Tieres mit Farbe, das seinen Responder verloren hat, markieren, was relativ aufwendig ist.

Die EP 1 537 531 B1 beschreibt ein Bildaufnahmesystem und ein Bildaufnahmeverfahren zur Auswertung der körperlichen Verfassung von Tieren. Dabei wird der Bodycondition-Score (ein Zahlenwert BCS) ermittelt, wobei das Verfahren die folgenden drei Schritte umfasst:
- Aufzeichnen eines vordefinierten Abschnitts von Interesse am Tierkörper und Erzeugung von Daten, die dieses repräsentieren;
- Verarbeitung der erzeugten Daten, um eine dreidimensionale Abbildung des Abschnitts von Interesse zu erhalten und
- Analysieren der dreidimensionalen Gestaltung, um einen vordefinierten messbaren Parameter zu bestimmen, deren Oberflächenrelief des Abschnitts von Interesse darstellt, um den Körperzustand anzuzeigen.

Die WO 03/059191 betrifft ein Verfahren zur zuverlässigen Vorhersage des Bodycondition-Score (Zahlenwertes) für Tiere. Der ermittelte Zahlenwert für Bodycondition-Score (BCS) kann dazu verwendet werden, die richtigen Futterrationen für Haustiere zu ermitteln.

Die WO 2004/049790 befasst sich mit einer Vorrichtung zum Erfassen eines Tieres mit einem Körperteil und einem Kopfteil, wobei Parameter erfasst werden, die sich auf die Querschnittsgröße des Tieres an einer bestimmten Position im Durchgang beziehen.

Die WO 2007/064202 beschreibt ein System zum Zählen von Tieren.

Die Erfindung hat von diesem Hintergrund ausgehend von der gattungsgemäßen Schrift zunächst die Aufgabe, die gattungsgemäße Vorrichtung und das gattungsgemäße Verfahren derart weiterzubilden, dass die Anzahl von Fehlzuordnungen bei der Melkplatzbelegung minimiert wird und möglichst viele Daten über das Tier gewonnen werden.

Die Erfindung löst diese Aufgabe durch den Gegenstand der Ansprüche 1 und 15.

Vorteilhafte Ausgestaltungen der Erfindung sind den Unteransprüchen und den nebengeordneten Ansprüchen zu entnehmen.

Anspruch 1 schlägt eine Vorrichtung zum Bereitstellen von Informationen über Tiere beim Durchgehen eines Tierdurchganges vor, wobei die Informationen zumindest die Anzahl der den Tierdurchgang durchlaufenden Tiere umfassen, mit zumindest einer an eine Rechnereinrichtung angeschlossenen Erkennungseinrichtung mit einer Sensoreinrichtung zum Erfassen von Daten der den Tierdurchgang durchlaufenden Tiere sowie mit einer Auswertungseinrichtung zur Erkennung von Tieren in den von der Sensoreinrichtung erfassten Daten und zur Ausgabe von Zählimpulsen beim Erkennen von Tieren in diesen Signalen, wobei die Sensoreinrichtung zur Tätigung von 3D-Aufnahmen ausgelegt ist und wobei die Auswertungseinrichtung zur Erkennung von Tieren in 3D-Daten der 3D-Aufnahmen und zum Zählen der Tiere anhand dieser Erkennung ausgelegt ist.

In Hinsicht auf das erfindungsgemäße Verfahren zum Bereitstellen von Informationen über Tiere beim Durchgehen eines Tierdurchganges mit einer erfindungsgemäßen Vorrichtung werden mit der Erkennungseinrichtung Tierdaten der den Tierdurchgang durchtretenden Tiere erfasst und mit der Auswertungseinrichtung ausgewertet und anhand der Auswertung Zählimpulse erzeugt, um einen Tierzähler (Counter) der Auswertungseinrichtung oder der Rechnereinrichtung zu setzen, wobei das Erfassen der Tiere zumindest die Schritte einer Erzeugung von 3D-Daten aus 3D-Aufnahmen der Tiere oder von Teilbereichen der Tiere und einer Auswertung dieser 3D-Daten zumindest zur Erzeugung der Zählimpulse umfasst.

Vorzugsweise umfasst das Verfahren ferner ein Identifizieren der Tiere mittels einer Identifikationseinrichtung, ggf. direkt aus den von der Erkennungseinrichtung gewonnenen Daten.

Das Verfahren umfasst ferner vorzugsweise eine Ermittlung eines weiteren Tierparameters aus den von der Erkennungseinrichtung gewonnenen Daten, wobei der weitere Tierparameter ein den Gesundheitszustand der Tiere kennzeichnender Parameter sein kann, der aus den 3D-Aufnahmen ermittelt wird.

Es ist zweckmäßig, wenn der weitere Tierparameter fortschreitend bei jedem Melkvorgang in einer Datenbank gespeichert wird.

Vorgeschlagen werden auch die Verwendung einer Vorrichtung nach einem der vorstehenden Ansprüche als Teil einer automatischen Melkanlage und die Verwendung einer Vorrichtung nach einem der vorstehenden Ansprüche als Teil eines Steuerungssystems beweglicher Einrichtungen an einem Melkroboter.

Die Vorrichtung erhöht in einfacher Weise die Erkennungsrate bei Durchlauferkennungen. Zudem kann durch die Vorrichtung auf Einzelplatzerkennungen in großen Melkständen verzichtet werden.

Erfindungsgemäß wird eine Vorrichtung konzipiert, mit welcher die durchlaufenden Tiere mit hoher Genauigkeit gezählt werden. Zudem können weitere Information über die erfaßten Tiere gewonnen werden. Die Erfassungseinrichtung ist so ausgestaltet, dass die Anzahl von Fehlzählungen/falsch zugeordneten Melkplätzen deutlich verringert wird. Da derartige Zuordnungsfehler bei der Registrierung der Melkvorgänge durch ein entsprechendes Datenverarbeitungsprogramm in Verbindung mit der erfindungsgemäßen Vorrichtung korrigiert werden, kann auch die Effizienz eines mit der Erfindung versehenen Melkstandes erhöht werden. Somit kann eine für das "precision lifestock farming" notwendige Zuordnungsgenauigkeit erreicht werden.

Während es bei der Auswertung von 2D-Daten bedingt durch zu geringe Kontraste und durch sich ständig ändernde Umgebungsbedingungen zu Fehlern kommen kann - es werden Tiere nicht als diese erkannt und somit auch nicht gezählt - tritt dieses Problem bei der Auswertung von 3D-Aufnahmen nicht mehr oder zumindest nur noch in einem deutlich verringerten Maße auf.

Die Erfassungseinrichtung der Erfindung ermöglicht zumindest die Zählung von Tieren, kann darüber hinaus aber auch noch für weitere Aufgaben der Erkennung - wie z.B. eine Ernährungszustandserkennung und/oder eine Lahmheiterkennung - genutzt werden.

So ist es vorteilhaft, wenn die gewonnen Daten auch dazu genutzt werden, Aussagen über den gesundheitlichen Zustand der Tiere zu gewinnen. Zwar ist es an sich bekannt, 3D-Aufnahmen von Tieren zu erstellen, um Rückschlüsse auf den gesundheitlichen Zustand der Tiere zu gewinnen. Die Erfindung bietet aber den Vorteil, dass bei der Durchlauferkennung fortlaufend derartige 3D-Aufnahmen gewonnen werden können, so dass auf einfache Weise eine fortlaufende Beobachtung des Gesundheitszustandes der Tiere möglich ist.

Ergänzt werden kann die Erkennungseinrichtung durch eine Identifikationseinrichtung zur individuellen bzw. individuellen, biometrischen Identifikation der an sich "als Tier" erkannten Tiere.

Die 3D-Aufnahmegeräte der Erkennungsvorrichtung werden vorzugsweise räumlich nahe zur Identifikationsvorrichtung installiert, wenn eine solche vorgesehen ist. Sie können sowohl räumlich vor oder nach der Identifikationseinrichtung angeordnet sein, bevorzugt sind sie in Laufrichtung der Tiere vor dieser angeordnet.

Betritt ein Tier den Bereich vor bzw. nach der Identifikationseinrichtung, werden von der Erkennungseinrichtung eine oder mehrere 3D-Aufnahmen betätigt.

Die 3D-Aufnahmen werden dann dazu verwendet, um zu erkennen, ob sich im Aufnahmebereich nur ein Tier oder mehrere Tiere aufhalten. Der erzeugte Zählimpuls entspricht der ermittelten Anzahl von Tieren. Es erfolgt dann eine Informationsausgabe für die Anzahl von Tieren, die den Eingangsbereich in Richtung Melkstand durchlaufen haben.

Es ist alternativ auch denkbar, kontinuierlich in kurzen zeitlichen Abständen Aufnahmen zu tätigen, um zu überprüfen, ob sich Tiere im Bereich der Erkennungseinrichtung befinden.

Derart ist es auch möglich, die erfindungsgemäße Vorrichtung nur oder auch allein als "Standalone" Tierzähler für z.B. Fleischtiere ohne Identifikationseinrichtung einzusetzen. Hier werden dann nur die Zählimpulse gezählt um die Anzahl der Tiere zu ermitteln.

Vorzugsweise wird die Vorrichtung aber um eine Identifikationsvorrichtung beispielsweise nach Art der DE 103 51 911 A1 ergänzt und die Zählinformationen werden mit den von der Identifikationseinrichtung ermittelten Parametern verknüpft, was ein besonders zuverlässiges Herdenmanagement ermöglicht und somit die notwendigen Vorraussetzungen für ein "precision livestock farming" schafft..

Durch die hohe Genauigkeit der 3D-Messung können noch eine Vielzahl von weiteren Informationen gewonnen werden.

So können z.B. die Breite des Tieres an verschiedenen Stellen, die Länge und/oder die (Durchlauf-)Geschwindigkeit ermittelt werden. Hieraus können tierspezifische Merkmale (biometrische Eigenschaften) gefunden und gespeichert werden. Durch eine Einbeziehung der dritten Dimension sind aber sehr genaue Daten ermittelbar, und somit kommt es bei der Auswertung nicht zu Problemen wegen fehlendem Kontrast oder unterschiedlichen Umwelteinflüssen.

Bedingt durch die hohe Genauigkeit können über die 3D-Aufnahme Kriterien der Ernährungszustände der Tiere untersucht werden. Insbesondere kann als Sonderform hiervon der BCS (Body condition scoring) ermittelt werden. Derart können im Herdenmanagement langfristige Überwachungen zur Gesundheit, Ernährung bzw. den Erfolg der Fütterung durchgeführt werden.

Durch eine situationsabhängige Ermittlung der Laufgeschwindigkeit des Tieres, können Indizien für die Gesundheitskontrolle wie z.B. Lahmheit gewonnen werden.

Zudem kann über eine genaue Bildanalyse unter Umständen eine Verletzungserkennung durchgeführt werden. Dies ist möglich, indem direkt die gewonnene 3D-Aufnahme automatisiert oder visuell ausgewertet wird. In der Aufnahme ist die Verletzung direkt oder z.B. über eine Ermittlung des Fliegenbefalls des Tieres feststellbar.

Des Weiteren ist es denkbar, über die Reflexionseigenschaften des Tieres zu erkennen, ob dieses z.B. stark schwitzt. Ist dieses z.B. bei sehr vielen Tieren der Fall könnte eine automatische Berieselung oder Gebläse gestartet werden oder generell Hinweise auf ein nicht optimales Stallklima gegeben werden.

Mit der Erfindung ist es möglich, die gewonnen Daten eindeutig mit dem jeweiligen Tier in Verbindung zu bringen. D.h. über Tage, Wochen, Monate wird zu dem jeweiligen Tier eine Vielzahl von Daten ( z.B. alle bisher beschriebenen ) aufgenommen und z.B. in einem Herdenmanagementsystem gespeichert. Somit wird eine umfangreiche Datenbank aufgebaut und eine automatische Auswertung auf Basis von historischen Daten und aktuellen Daten möglich.

Diese Datenbank kann dann z.B. dazu benutzt werden, wenn ein Tier mit der Vorrichtung gezählt bzw. aufgenommen wurde und mittels der klassischen Erkennungstechnik nicht erkannt wurde ( z.B. RFID-Tag verloren oder defekt), um durch einen Vergleich der aktuell gewonnenen Daten mit den Daten in der Datenbank das Tier zu identifizieren bzw. bei einer nicht eindeutigen Identifikation eine Auswahl von möglichen Tieren dem Landwirt zu liefern.

Zudem ist es denkbar, dass durch die Vielzahl von Daten und deren hoher Genauigkeit die Vorrichtung als Standalone-Identifikationssystem benutzt wird und direkt über die Erkennungseinrichtung auch die Identifikation der Tiere durchgeführt wird.

Es ist der Einsatz verschiedenster Sensoren möglich, die dazu geeignet sind, 3D-Aufnahmen zu erzeugen. Besonders geeignet erscheint der Einsatz einer 3D-Kamera (insbesondere einer 3D-Direkt-Kamera, basierend auf einer "time-of-flight".Messung), einer Stereografie oder einer Lasertriangulation mit Laserlichtschnittverfahren.

Nachfolgend wird die Erfindung anhand von Ausführungsbeispielen unter Bezug auf die Zeichnung näher beschrieben. Es zeigt:
- Fig. 1: eine perspektivische Ansicht eines Tierdurchganges mit einer 3D-Kamera und einer Identifikationseinrichtung und einem Tier beim Durchschreiten des Tierdurchganges;
- Fig.2a: einen zweiten Tierdurchgang;
- Fig.2b: eine Aufnahme von Tieren beim Passieren des Tierdurchganges der Fig. 2a;
- Fig.3: einen dritten Tierdurchgang;
- Fig.4: einen vierten Tierdurchgang;
- Fig. 5 - 7: Draufsichten auf Tiere beim Durchgehen eines Tierdurchganges zur Veranschaulichung von mit der erfindungsgemäßen Erkennungseinrichtung erfassbaren Situationen;
- Fig. 8a,b: Blockschaltbilder zur Veranschaulichung eines grundsätzlichen Aufbaus einer erfindungsgemäßen Vorrichtung;
- Fig. 9, 10: mittels 3D-Kameras erstellte Aufnahmen;

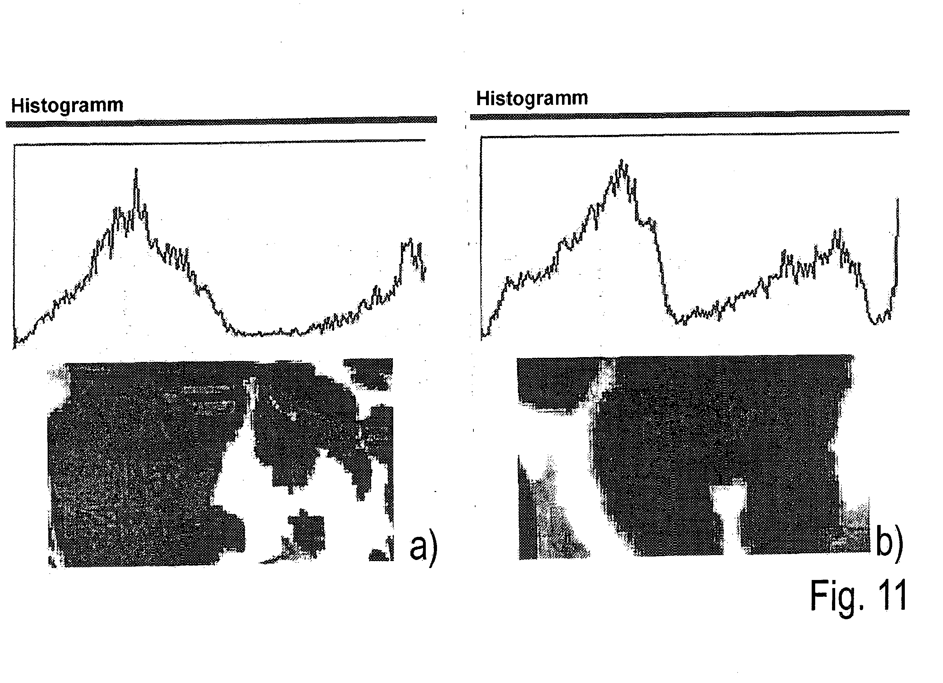

- Fig. 11: Tieraufnahmen und zugehörige Aufnahmehistogramme; und
- Fig. 12: einen schematisch dargestellten Melkstand mit einem Tierdurchgang nach Art der Fig. 1 und
- Fig. 13 a -d: weitere Blockschaltbilder zur Veranschaulichung eines grundsätzlichen Aufbaus einer erfindungsgemäßen Vorrichtung;

Exemplarisch sind in den Figuren Bilder mit Kühen dargestellt. Die Vorrichtung und das Verfahren der Erfindung sind darüber hinaus aber auch für andere Tiere, insbesondere melkbare Tiere wie z.B. Schafe und Ziegen und für nicht melkbare Tiere wie Schweine geeignet.

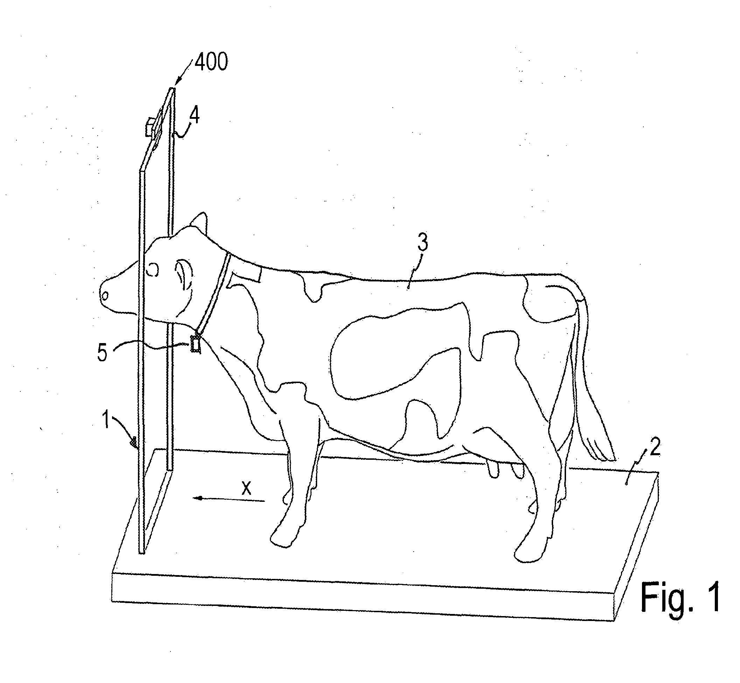

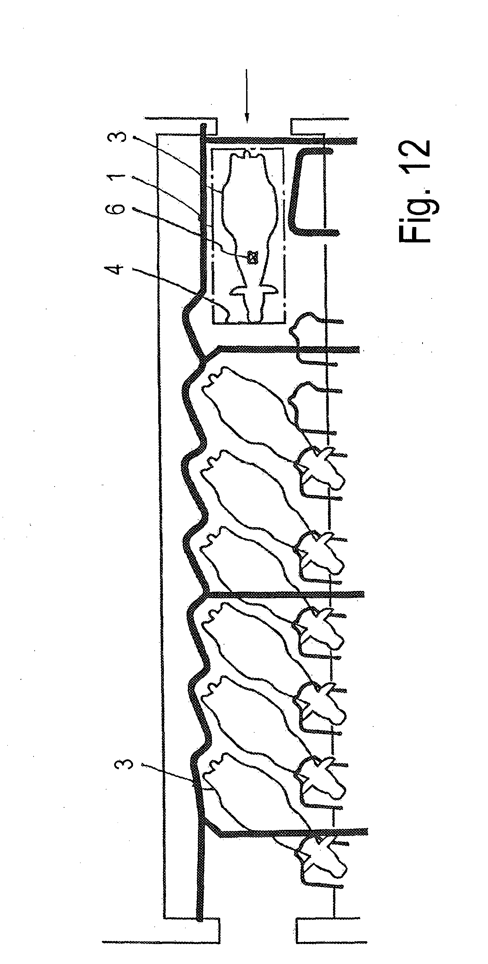

Fig. 1 zeigt einen Tierdurchgang 1 mit einem Boden 2, auf welchem ein Tier - hier eine zu melkende Kuh 3 - in Vorwärtsrichtung x läuft. Der Tierdurchgang kann seitlich von hier nicht dargestellten Wänden begrenzt sein. Fig. 12 zeigt eine Draufsicht auf einen Melkstand mit einem derartigen Tierdurchgang 1.

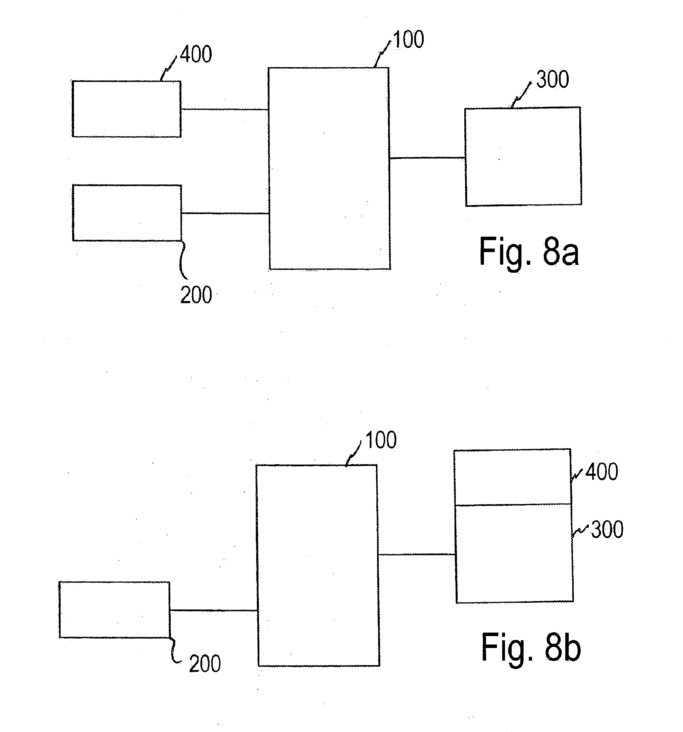

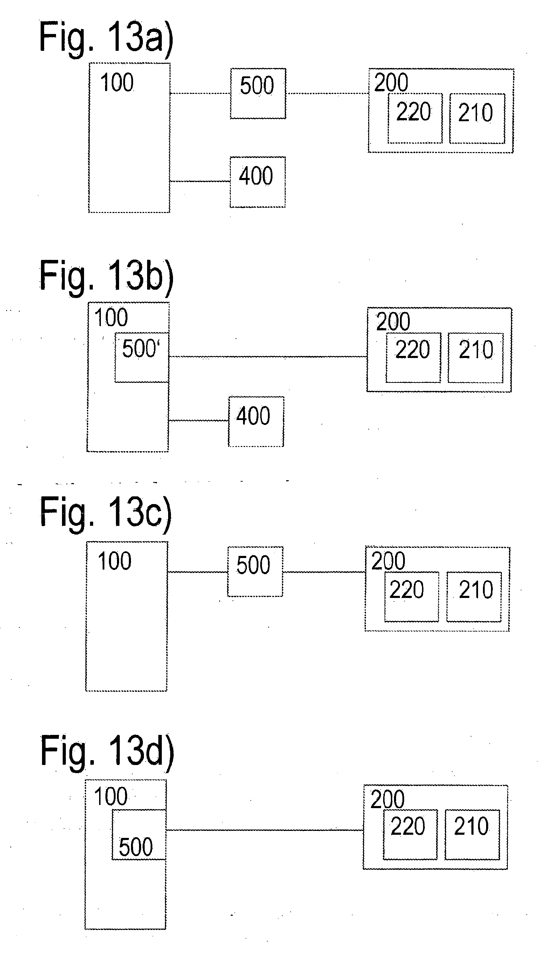

Der Tierdurchgang ist mit einer Vorrichtung zum Bereitstellen von Informationen über Tiere beim Durchgehen eines Tierdurchganges versehen, wie sie schematisch in Fig. 8a oder 8b sowie 13 a - d dargestellt ist.

Diese Vorrichtung zum Bereitstellen von Informationen über Tiere beim Durchgehen eines Tierdurchganges weist eine Rechnereinrichtung 100 auf (vorzugsweise eine Datenverarbeitungseinrichtung mit Ein- und Ausgabegeräten und einer zentralen ProzessoreinRichtung, der ein Speicher zugeordnet ist und die mit einem Programm versehen ist).

Die Vorrichtung umfasst ferner eine an die Rechnereinrichtung 100 angeschlossene Erkennungseinrichtung 200 mit einer Sensoreinrichtung zum Erfassen von Tierdaten der den Tierdurchgang durchlaufenden Tiere und eine Auswertungseinrichtung 300 zur Erfassung und Aufsummierung von Zählimpulsen anhand einer Auswertung der von der Erkennungseinrichtung abgegebenen Tierdaten, die ein eigenes Programm oder ein Teil des auf der Rechnereinrichtung ablaufenden Programms sein kann.

Die Erkennungseinrichtung 200 ist dazu ausgelegt, 3D-Aufnahmen der Tiere zu tätigen, wobei mittels eines geeigneten Bildanalyseverfahrens (der Auswertungseinrichtung 300) in den 3D-Aufnahmen die Tiere erfasst werden. Mit jeder Erfassung wird ein Zählimpuls erzeugt bzw. ein entsprechender Counter bzw. Zähler weitergesetzt und gespeichert.

Vorzugsweise umfasst die Vorrichtung ferner eine Identifikationseinrichtung 400 zur Identifizierung der mit der Erkennungseinrichtung 200 gezählten bzw. erfassten Tiere.

Diese Identifikationseinrichtung 400 kann durch die Erkennungseinrichtung 200 (oder die Auswertungseinrichtung) selbst gebildet werden, in dem die mit der Erkennungseinrichtung 200 getätigten präzisen Tieraufnahmen auch zur Identifizierung der Tiere anhand eines Vergleich mit in der Datenverarbeitungsvorrichtung 100 gespeicherten älteren Aufnahmen genutzt wird (Fig. 8b).

Die Identifikationseinrichtung kann aber auch auf andere Weise realisiert werden, so nach Art der Fig. 1 (dem entspricht die Darstellung der Fig. 8a).

Nach Fig. 1 umfasst die Identifikationseinrichtung 400 einen als Sender und/oder Empfänger wirkenden Identifikationsrahmen 4, der dazu ausgelegt ist, drahtlos Daten aus einem hier rein schematisch dargestellten RFID-Baustein 5 (vorzugsweise ein Responder) auszulesen, den die Kuh trägt und der diesen RFID-Baustein 5 bei Bedarf vorzugsweise auch mit Daten beschreiben kann. Der Identifikationsrahmen 4 ist derart bemessen, dass ihn die zu identifizierenden Tiere durchschreiten können.

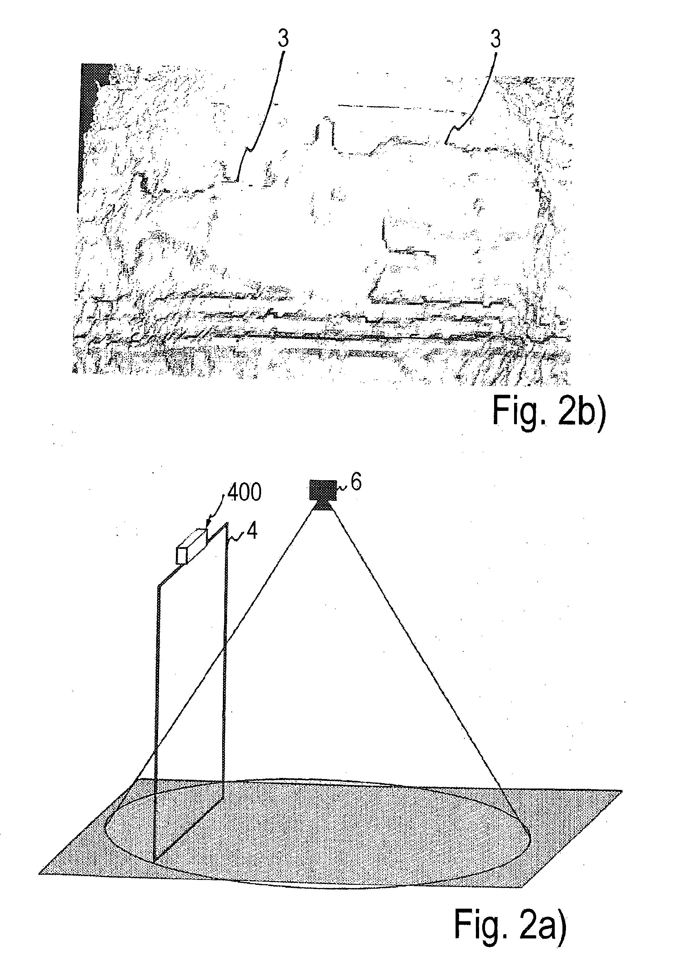

Der Identifikationseinrichtung 400 ist die Erkennungseinrichtung 200 zugeordnet, von der in Fig. 2a) eine 3D-Kamera 6 als Sensoreinrichtung schematisch dargestellt ist. Die Kamera an sich kann auch diese Auswerlungsreinrichtung enthalten.

Die Vorrichtung nach Fig. 13 umfasst die an die Rechnereinrichtung 100 angeschlossene Erkennungseinrichtung 200 mit einer Sensoreinrichtung 210 zum Erfassen von Tierdaten der den Tierdurchgang durchlaufenden Tiere und mit der Auswertungseinrichtung 220, in der mittels geeigneter Bildanalyseverfahren die erfassten 3d-Daten ausgewertet werden. Die Erkennungseinrichtung 200 ist mit einer weiteren Auswerteeinheit 500 verbunden, welche die von der Erkennungseinrichtung 200 weitergegebenen Daten erfasst und weiterbearbeitet. So können z.B. Zählimpulse erfasst und aufsummiert werden. Diese Auswerteeinheit 500 kann eine separate Einrichtung sein (Fig. 13a) oder ein Bestandteil des in der Rechnereinheit 100 ablaufenden Programms sein (Fig. 13b).

Die Identifikationseinrichtung 400 kann auch durch die Erkennungseinrichtung 200 und weitere Sensoren (z.B. Farbkameras) selbst gebildet werden, indem die mit der Erkennungseinrichtung 200 und den evtl. vorhandenen zusätzlichen Sensoren getätigten präzisen Tieraufnahmen auch zur Identifikation der Tiere anhand eines Vergleichs mit der in der Datenverarbeitungseinrichtung 100 gespeicherten älteren Aufnahmen genutzt wird (Fig. 13c und d).

Die Tiere betreten normalerweise den Melkstand durch einen Eingangsbereich. In diesem befindet sich dann die Vorrichtung der Fig. 1. Die Erkennungseinrichtung 200 kann in Laufrichtung X räumlich vor oder nach der Identifikationseinrichtung angeordnet sein, bevorzugt wird sie in Laufrichtung X vor dieser angeordnet.

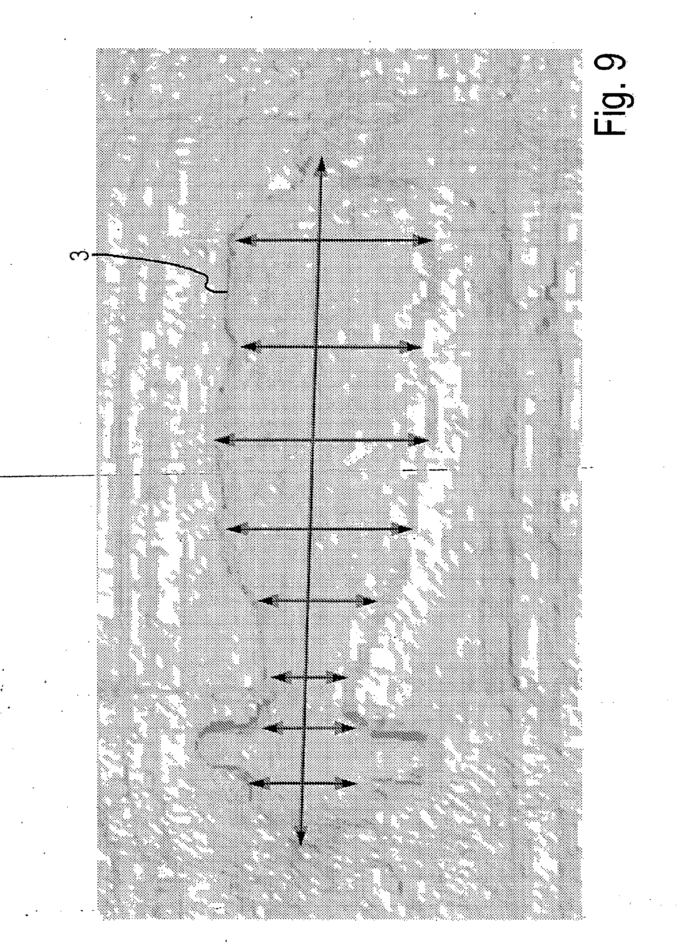

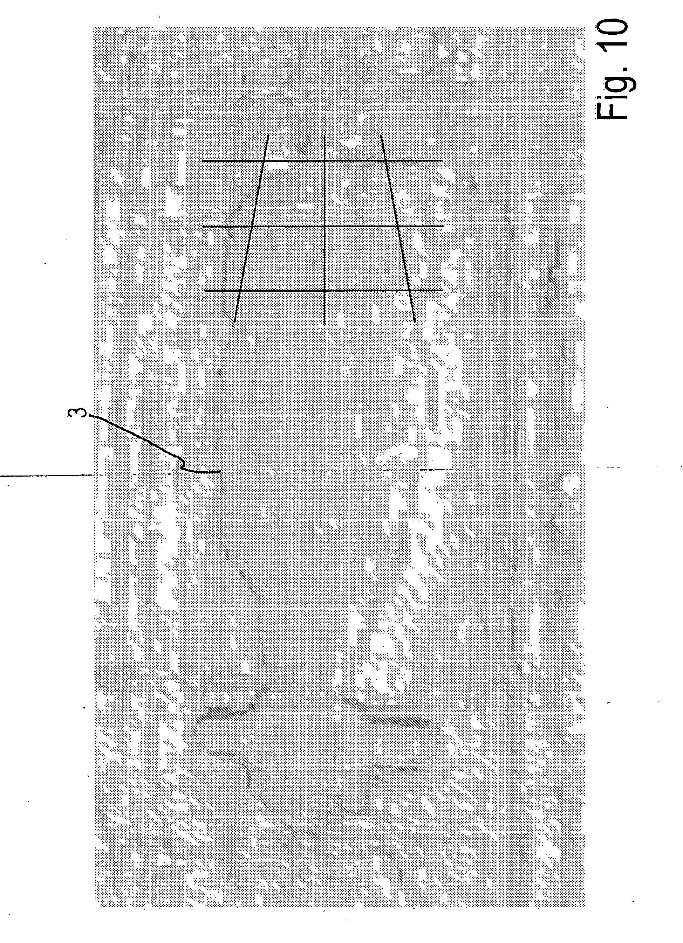

Betritt nun ein Tier den Bereich vor bzw. nach der Identifikationseinrichtung 400, werden mittels der Erkennungseinrichtung 200 eine oder mehrere 3D-Aufnahmen getätigt (siehe Fig. 2b und 9 und 10)

Diese 3D-Aufnahmen werden mit Hilfe eines Bildanalyseverfahrens ausgewertet, um festzustellen, ob auf der Aufnahme ein oder mehrere Tiere abgebildet sind. Insbesondere ist es möglich, automatisiert auch die Problemfälle gemäß der Fig. 5 bis 7 zu erkennen und dennoch die Anzahl der Tiere korrekt zu ermitteln.

Es erfolgt dann eine Informationsausgabe für die Anzahl von Tieren, die den Eingangsbereich in Richtung Melkstand durchlaufen haben.

Durch den Einsatz einer 3D-Kamera, Stereografie oder Lasertriangulation mit Laserlichtschnittverfahren ( bzw. generell einer 3D-Aufnahme) kann eine Zählung der Tiere, mit allen normalen Betriebssituationen auch der Fig. 5 bis 7 mit geringer Fehlerrate durchgeführt werden. Zudem kann eine Vielzahl an weiteren Informationen gewonnen werden.

Die Gewinnung der 3D-Daten kann auf verschiedene Weise erfolgen.

Nach Fig. 2a wird zur Erzeugung der 3D-Aufnahmen die 3D-Kamera 6 eingesetzt, die dazu ausgelegt ist, direkte 3D-Information pro Bildpixel zu erzeugen und zu speichern. Dies ist in Fig. 2a und b angedeutet. Hier wird im Gegensatz zu 2D-Aufnahmen nicht nur die reflektierte Bildinformation aufgenommen, sondern auf Bildpixelebene auch die Entfernungsinformation. Hierzu wird gezielt moduliertes Licht ausgesendet und es wird gemessen wie lange es dauert, bis ein Photon von der Kamera aufgenommen wird ( time of flight Messung).

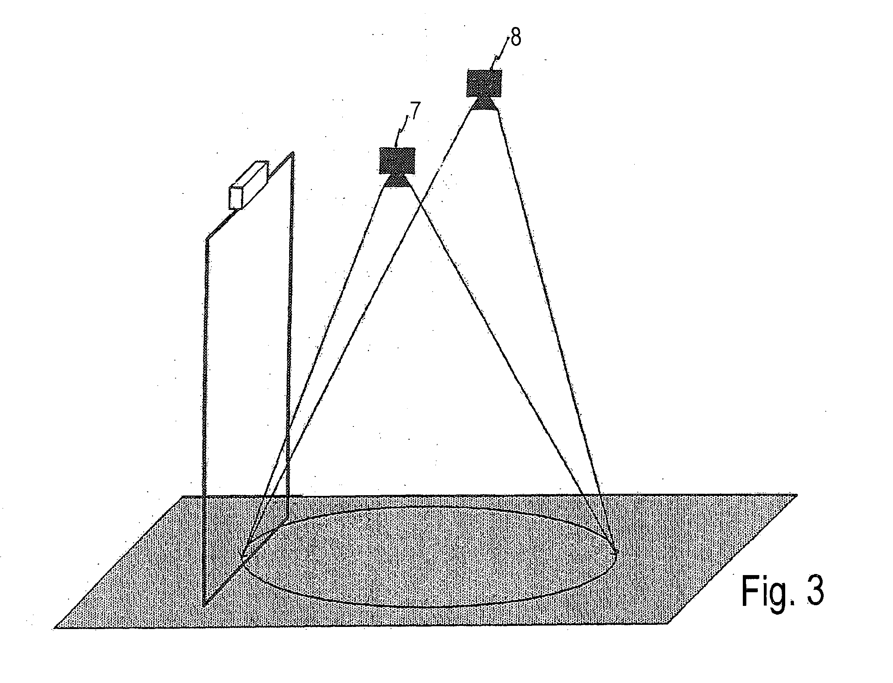

Nach Fig.3 wird eine Stereografieanordnung eingesetzt. Diese umfaßt mindestens zwei Kameras 7, 8, die in einem festen Abstand zueinander stehen, um ein 3D-Bild zu generieren. Bei der an sich bekannten Stereografie werden zwei Bilder von verschiedenen Positionen aufgenommen. Um nicht eine Kamera in die zwei verschiedenen Positionen bewegen zu müssen, werden die Bilder vorzugsweise mit den zwei Kameras 7, 8 aufgenommen, die in einem festen Abstand zueinander angeordnet sind. Durch eine datentechnische Verknüpfung der beiden Bilder entsteht ein 3D-Bild.

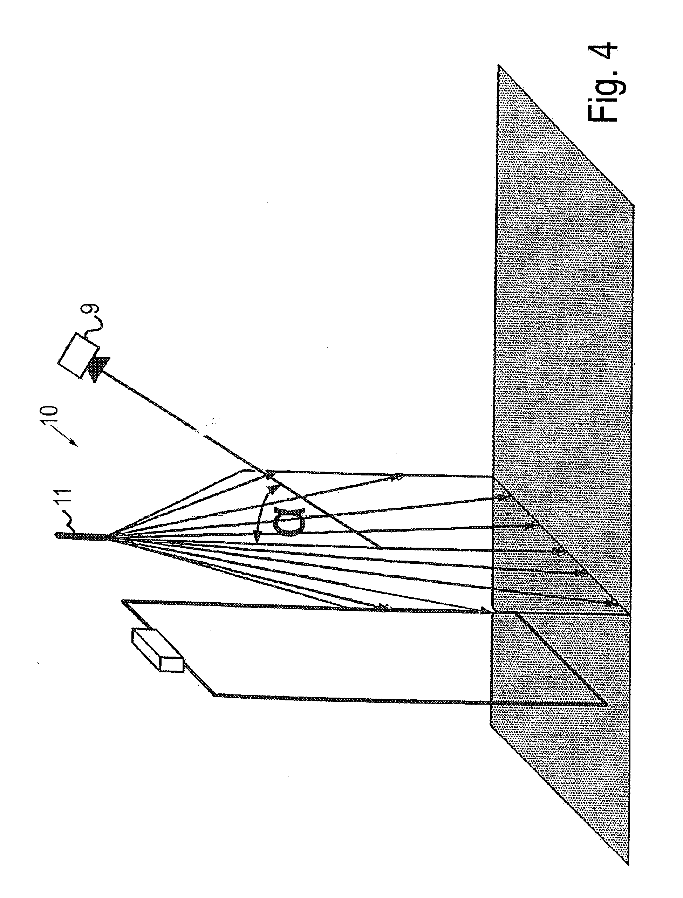

Nach Fig. 4 wird eine Anordnung 10 zur Lasertriangulation mit Laserlichtschnitten eingesetzt. Mittels eines projizierten Laserstrahls eines Lasers 11 wird dabei ein Lichtschnitt erzeugt, der wiederum mit einer unter einem festen Winkel zum Laser 11 stehenden Kamera 9 ausgewertet wird. Dies ist in Fig. 4 dargestellt. Der Laser 11 und die Kamera 9 sind in einem festen Abstand zueinander montiert. Die Laserlichtquelle projiziert z.B. einen Laserstrahl ( auch Strahlenvorhang genannt ). Tritt nun ein Körper in diesen ein, so wird er "geschnitten" und die Reflexionen werden von der Kamera aufgenommen. Über den Winkel α kann dann die Entfernung berechnet werden.

Die Kameras 6, 7, 8, 9 sind vorzugsweise oberhalb des Tieres angeordnet.

### Bezugszeichen

- Tierdurchgang: 1
- Boden: 2
- Kuh: 3
- Identifikationsrahmen: 4
- RFID-Baustein: 5
- 3D-Kamera: 6
- Kameras: 7, 8
- Kamera: 9
- Anordnung: 10
- Lasers: 11

- Rechnereinrichtung: 100
- Erkennungseinrichtung: 200
- Sensoreinrichtung: 210
- Auswertungseinrichtung: 220, 300
- Identifikationseinrichtung: 400
- Auswerteeinheit: 500

- Winkel: α
- Vorwärtsrichtung: x

## Patentansprüche

1. Vorrichtung zum Bereitstellen von Informationen über Tiere beim Durchgehen eines Tierdurchganges (1), wobei die Informationen zumindest die Anzahl der den Tierdurchgang durchlaufenden Tiere umfassen,
a. mit zumindest einer an eine Rechnereinrichtung (100) angeschlossenen Erkennungseinrichtung (200) mit einer Sensoreinrichtung (210) zum Erfassen von Daten der den Tierdurchgang durchlaufenden Tiere
b. sowie mit einer Auswertungseinrichtung (220, 300) zur Erkennung von Tieren in den von der Sensoreinrichtung erfassten Daten und zur Ausgabe von Zählimpulsen beim Erkennen von Tieren in diesen Signalen,
**dadurch gekennzeichnet, dass**
c. die Sensoreinrichtung (210) zur Tätigung von 3D-Aufnahmen ausgelegt ist und
d. die Auswertungseinrichtung (220, 300) zur Erkennung von Tieren in den 3D-Daten der 3D-Aufnahmen und zumindest zum Zählen der Tiere anhand dieser Erkennung ausgelegt ist.

2. Vorrichtung nach Anspruch 1, **dadurch gekennzeichnet, dass** die Sensoreinrichtung (210) wenigstens eine 3D-Kamera (6) aufweist.

3. Vorrichtung nach Anspruch 1 oder 2, **dadurch gekennzeichnet, dass** die Sensoreinrichtung (210) mit einer Beleuchtungseinheit (210) und einer zweidimensionalen Digital-Kamera mittels einer "time-of-flight" Messung die 3D-Daten ermittelt.

4. Vorrichtung nach Anspruch 1 oder 2, **dadurch gekennzeichnet, dass** die Sensoreinrichtung (210) zur Erfassung von Stereographien ausgelegt ist, wobei die Sensoreinrichtung (210) vorzugsweise zur Erfassung von Stereografieaufnahmen zwei räumlich voneiander beabstandete Kameras (7, 8) aufweist.

5. Vorrichtung nach einem der vorstehenden Ansprüche, **dadurch gekennzeichnet, dass** die Sensoreinrichtung (210) als eine Einrichtung (10) zur Lasertriangulation ausgelegt ist und/oder dass sie ferner eine Identifikationseinrichtung (400) zum Identifizieren der erkannten Tiere aufweist.

6. Vorrichtung nach Anspruch 5, **dadurch gekennzeichnet, dass** die Identifikationseinrichtung (400) zum Identifizieren der Tiere anhand eines Auslesens von Daten aus einem Identifikationsmittel am Tier ausgelegt ist und/oder dass die Identifikationseinrichtung zum Identifizieren der Tiere anhand eines drahtlosen Auslesens von Daten aus einem RFID-Chip/Tag als Identifikationsmittel am Tier ausgelegt ist.

7. Vorrichtung nach einem der vorhergehenden Ansprüche, **dadurch gekennzeichnet, dass** die Rechnereinheit (100) direkt zum Identifizieren der Tiere anhand eines Vergleichs der von der Erkennungseinrichtung (200) getätigten Aufnahmen mit gespeicherten historischen Daten ausgelegt ist.

8. Vorrichtung nach einem der vorstehenden Ansprüche, **dadurch gekennzeichnet dass** die Auswertungseinrichtung (220, 300) zum Erfassen weiterer tierspezifischer Daten aus den von der Erkennungseinrichtung getätigten 3D-Aufnahmen ausgelegt ist und/oder dass die Auswertungseinrichtung (220, 300) zum Ermitteln von Ernährungszustandsdaten aus den von der Sensoreinrichtung (210) getätigten 3D-Aufnahmen ausgelegt ist.

9. Vorrichtung nach Anspruch 8, **dadurch gekennzeichnet, dass** die Rechnereinrichtung (100) für die Verarbeitung und Speicherung der Ernährungszustandsdaten ausgelegt ist und/oder dass die Rechnereinrichtung (100) zur automatischen Fütterungsoptimierung anhand der ermittelten und gespeicherten Ernährungszustandsdaten ausgelegt ist.

10. Vorrichtung nach Anspruch 8 oder 9, **dadurch gekennzeichnet, dass** die Rechnereinrichtung (100) für eine tabellarische und/oder grafische Ausgabe der Ernährungszustandsdaten ausgelegt ist und/oder dass die Rechnereinrichtung (100) für eine automatische Alarmierung bei kritischen und/oder abweichenden Ernährungszustandsdaten ausgelegt ist.

11. Vorrichtung nach einem der vorhergehenden Ansprüche 8 bis 10, **dadurch gekennzeichnet, dass** die Ernährungszustände gemäß dem Bewertungssehema des Body Condition Score ermittelt, verarbeitet und/oder gespeichert werden.

12. Melkanlage, **gekennzeichnet durch** eine Vorrichtung nach einem der vorhergehenden Ansprüche

13. Verwendung einer Vorrichtung nach einem der vorstehenden Ansprüche 1 bis 11 als Teil einer automatischen Melkanlage.

14. Verwendung einer Vorrichtung nach einem der vorstehenden Ansprüche 1 bis 11 als Teil eines Steuerungssystems beweglicher Einrichtungen an einem Melkroboter.

15. Verfahren zum Bereitstellen von Informationen über Tiere beim Durchgehen eines Tierdurchganges mit einer Vorrichtung nach einem der vorstehenden Ansprüche 1-11, mit folgenden Schritten:
a. mit der Erkennungseinrichtung (200) werden Tierdaten der den Tierdurchgang durchtretenden Tiere erfasst und mit der Auswertungseinrichtung (220, 300) ausgewertet,
b. anhand der Auswertung werden Zählimpulse erzeugt, um einen Tierzähler (Counter) der Auswertungseinrichtung oder der Rechnereinrichtung (100) zu setzen.
**dadurch gekennzeichnet, dass**
c. das Erfassen der Tiere zumindest die Schritte
i. einer Erzeugung von 3D-Daten aus 3D-Aufnahnen der Tiere oder von Teilbereichen der Tiere und
ii. eine Auswertung dieser 3D-Daten zumindest zur Erzeugung der Zählimpulse umfasst.

16. Verfahren nach Anspruch 15, **dadurch gekennzeichnet, dass** es ferner ein Identifizieren der Tiere mittels einer Identifikationseinrichtung (400) umfasst und/oder dass es ferner ein Identifizieren der Tiere aus den von der Erkennungsemrichtung (200) gewonnenen 3D-Daten umfasst.

17. Verfahren nach Anspruch 15 oder 16, **dadurch gekennzeichnet, dass** es ferner eine Ermittlung eines weiteren Tierparameters aus den von der Erkennungseinrichtung (200) gewonnenen 3D-Daten umfasst.

18. Verfahren nach Anspruch 17, **dadurch gekennzeichnet, dass** der weitere Tierparameter ein den Gesundheitszustand der Tiere kennzeichnender Parameter ist und/oder dass der weitere Tierparameter fortschreitend bei jedem Melkvorgang in einer Datenbank gespeichert wird.

## Claims

1. Device for providing information about animals as they go through an animal passage (1), the information comprising at least the number of the animals walking through the animal passage,
a. having at least one recognition device (200) connected to a computer device (100) and having a sensor device (210) for acquiring data on the animals walking through the animal passage,
b. and having an evaluation device (220, 300) for recognizing animals in the data acquired by the sensor device, and for outputting counting pulses upon recognizing animals in said signals,
**characterized in that**
c. the sensor device (210) is designed to effect 3D photographs, and
d. the evaluation device (220, 300) is designed to recognize animals in the 3D data of the 3D photographs and, at least, to count the animals with the aid of said recognition.

2. Device according to Claim 1, **characterized in that** the sensor device (210) has at least one 3D camera (6).

3. Device according to either of Claims 1 and 2, **characterized in that** the sensor device (210) determines the 3D data with the aid of an illumination unit (210) and a two-dimensional digital camera by means of a time-of-flight measurement.

4. Device according to either of Claims 1 and 2, **characterized in that** the sensor device (210) is designed to take stereographs, the sensor device (210) preferably having two cameras (7, 8) spaced apart from one another for taking stereographic photographs.

5. Device according to one of the preceding claims, **characterized in that** the sensor device (210) is designed as a device (10) for laser triangulation, and/or **in that** it further has an identification device (400) for identifying the animals recognized.

6. Device according to Claim 5, **characterized in that** the identification device (400) is designed to identify the animals by reading out data from an identification means, and/or **in that** the identification device is designed to identify the animals by reading out data in a wireless fashion from an RFID chip/tag as identification means on the animal.

7. Device according to one of the preceding claims, **characterized in that** the computer device (100) is designed to directly identify the animals by a comparison of the photographs effected by the recognition device (200) with stored historic data.

8. Device according to one of the preceding claims, **characterized in that** the evaluation device (220, 300) is designed to acquire further animal-specific data from the 3D photographs effected by the recognition device, and/or **in that** the evaluation device (220, 300) is designed to determine the nutritional status data from the 3D photographs effected by the sensor device (210).

9. Device according to Claim 8, **characterized in that** the computer device (100) is designed to process and store the nutritional status data, and/or **in that** the computer device (100) is designed to use the nutritional status data determined and stored to automatically optimize feeding.

10. Device according to either of Claims 8 and 9, **characterized in that** the computer device (100) is designed for tabular and/or graphic output of the nutritional status data, and/or **in that** the computer device (100) is designed to raise the alarm automatically given critical and/or deviant nutritional status data.

11. Device according to one of the preceding Claims 8 to 10, **characterized in that** the nutritional statuses are determined, processed and/or stored in accordance with the appraisal scheme of the body condition score.

12. Milking plant, **characterized by** a device according to one of the preceding claims.

13. Use of a device according to one of the preceding Claims 1 to 11 as part of an automatic milking plant.

14. Use of a device according to one of the preceding Claims 1 to 11, as part of a control system of mobile devices on a milking robot.

15. Method for providing information about animals as they go through an animal passage with the aid of a device according to one of the preceding Claims 1-11, having the following steps:
a. animal data of the animals walking through the animal passage are acquired with the aid of the recognition device (200), and are evaluated with the aid of the evaluation device (220, 300),
b. counting pulses are produced with the aid of the evaluation in order to set an animal counter of the evaluation device or of the computer device (100),
**characterized in that**
c. the animals are detected using at least the steps of
i. producing 3D data from 3D photographs of the animals or of segments of the animals, and
ii. evaluating said 3D data at least in order to produce the counting pulses.

16. Method according to Claim 15, **characterized in that** it further comprises an identification of the animals by means of an identification device (400), and/or **in that** it further comprises an identification of the animals from the 3D data obtained by the recognition device (200).

17. Method according to either of Claims 15 and 16, **characterized in that** it further comprises a determination of a further animal parameter from the 3D data obtained by the recognition device (200).

18. Method according to Claim 17, **characterized in that** the further animal parameter is a parameter characterizing the state of health of the animals, and/or **in that** the further animal parameter is progressively stored in a database in each milking operation.

## Revendications

1. Dispositif de mise à disposition d'informations sur des animaux traversant un passage pour animaux (1), les informations comportant au moins le nombre des animaux traversant le passage pour animaux, comprenant :
a. au moins un système de reconnaissance (200) qui est relié à un système informatique (100) et a un système de détection (210) servant à la détection des données des animaux traversant le passage pour animaux
b. ainsi qu'un système d'évaluation (220, 300) servant à la reconnaissance d'animaux dans les données détectées par le système de détection et servant à la sortie d'impulsions de comptage lors de la reconnaissance d'animaux dans ces signaux,
**caractérisé en ce que**
c. le système de détection (210) est conçu pour la réalisation d'enregistrements 3D et
d. le système d'évaluation (220, 300) est conçu pour la reconnaissance d'animaux dans les données 3D des enregistrements 3D et au moins pour le comptage des animaux à l'aide de cette reconnaissance.

2. Dispositif selon la revendication 1, **caractérisé en ce que** le système de détection (210) comprend au moins une caméra 3D (6).

3. Dispositif selon la revendication 1 ou 2, **caractérisé en ce que** le système de détection (210) détermine les données 3D avec une unité d'éclairage (210) et avec une caméra numérique bidimensionnelle au moyen d'une mesure du « temps de vol ».

4. Dispositif selon la revendication 1 ou 2, **caractérisé en ce que** le système de détection (210) est conçu pour la détection de stéréogrammes, le système de détection (210) comprenant de préférence pour la détection des enregistrements des stéréogrammes deux caméras (7, 8) écartées l'une de l'autre dans l'espace.

5. Dispositif selon l'une quelconque des revendications précédentes, **caractérisé en ce que** le système de détection (210) est conçu en tant que dispositif (10) permettant la triangulation laser et/ou **en ce qu'**il comprend en outre un dispositif d'identification (400) servant à l'identification des animaux reconnus.

6. Dispositif selon la revendication 5, **caractérisé en ce que** le dispositif d'identification (400) est conçu pour l'identification des animaux à l'aide d'une lecture de données provenant d'un moyen d'identification porté par l'animal et/ou **en ce que** le dispositif d'identification est conçu pour l'identification des animaux à l'aide d'une lecture sans fil des données provenant d'une puce/étiquette RFID servant de moyen d'identification porté par l'animal.

7. Dispositif selon l'une quelconque des revendications précédentes, **caractérisé en ce que** le système informatique (100) est conçu pour l'identification directe des animaux à l'aide d'une comparaison des enregistrements réalisés par le système de reconnaissance (200) avec des données historiques stockées.

8. Dispositif selon l'une quelconque des revendications précédentes, **caractérisé en ce que** le système d'évaluation (220, 300) est conçu pour la détection d'autres données spécifiques aux animaux d'après les enregistrements 3D réalisés par le système de reconnaissance et/ou **en ce que** le système d'évaluation (220, 300) est conçu pour la détermination des données d'état d'alimentation à partir des enregistrements 3D réalisés par le système de détection (210).

9. Dispositif selon la revendication 8, **caractérisé en ce que** le système informatique (100) est conçu pour le traitement et le stockage des données d'état d'alimentation et/ou **en ce que** le système informatique (100) est conçu pour l'optimisation automatique de la nourriture à l'aide des données d'état d'alimentation déterminées et stockées.

10. Dispositif selon la revendication 8 ou 9, **caractérisé en ce que** le système informatique (100) est conçu pour une sortie tabulaire et/ou graphique des données d'état d'alimentation et/ou **en ce que** le système informatique (100) est conçu pour donner automatiquement une alarme en cas de données d'état d'alimentation critiques et/ou déviantes.

11. Dispositif selon l'une quelconque des revendications précédentes 8 à 10, **caractérisé en ce que** les états d'alimentation sont déterminés, traités et/ou stockés selon le schéma d'évaluation de la cote de condition de chair.

12. Installation de traite, **caractérisée par** un dispositif selon l'une quelconque des revendications précédentes.

13. Utilisation d'un dispositif selon l'une quelconque des revendications précédentes 1 à 11 en tant que partie d'une installation de traite automatique.

14. Utilisation d'un dispositif selon l'une quelconque des revendications précédentes 1 à 11 en tant que partie d'un système de commande d'installations mobiles sur un robot de traite.

15. Procédé de mise à disposition d'informations sur des animaux traversant un passage pour animaux avec un dispositif selon l'une quelconque des revendications précédentes 1 à 11, avec les étapes suivantes :
a. les données animales des animaux traversant le passage pour animaux sont détectées avec le système de reconnaissance (200) et évaluées avec le système d'évaluation (220, 300),
b. à l'aide de l'évaluation sont générées des impulsions de comptage afin de positionner un compteur d'animaux du système d'évaluation ou du système informatique (100),
**caractérisé en ce que**
la détection des animaux comprend au moins les étapes suivantes
i. une génération de données 3D à partir des enregistrements 3D des animaux ou de parties des animaux et
ii. une évaluation de ces données 3D comporte au moins la génération des impulsions de comptage.

16. Procédé selon la revendication 15, **caractérisé en ce qu'**il comporte en outre une identification des animaux au moyen d'un système d'identification (400) et/ou **en ce qu'**il comporte en outre une identification des animaux à partir des données 3D acquises par le système de reconnaissance (200).

17. Procédé selon la revendication 15 ou 16, **caractérisé en ce qu'**il comporte en outre une détermination d'un autre paramètre d'animal à partir des données 3D acquises par le système de reconnaissance (200).

18. Procédé selon la revendication 17, **caractérisé en ce que** l'autre paramètre d'animal est un paramètre caractérisant l'état de santé de l'animal et/ou **en ce que** l'autre paramètre d'animal est stocké consécutivement dans une banque de données à chaque opération de traite.
